# EUROPEAN PATENT APPLICATION

(11) **EP 1 977 851 A1**
(43) Date of publication of application: **08.10.2008**
(21) Application number: 08153466.1
(22) Date of filing: 27.03.2008
(51) Int. Cl.: B23K 35/02, B23K 35/30, B23K 35/36

(54) **Brazing formulation and method of making the same**

(30) Priority: 04.04.2007 US 696307
(71) Applicant: GENERAL ELECTRIC COMPANY, Schenectady, NY 12345 (US)
(72) Inventor: Kool, Lawrence Bernard, Clifton Park, NY 12065 (US)
(74) Representative: Szary, Anne Catherine

(57) **Abstract**

A braze formulation includes a novel promoter and a metal filler. The promoter includes a blend of potassium tetrafluoroaluminate and potassium tetrafluoroborate. The braze may be used for repairing cracks in a substrate. The braze has a low melt point, removes oxides from within cracks and has improved penetration into cracks for repair.

## Description

### FIELD OF THE INVENTION

This invention relates to brazing formulations and more particularly, to brazing formulations for repairing cracks in substrates.

### BACKGROUND OF THE INVENTION

Airfoil components in gas turbines that are in the hot gas path can develop cracks during service. One method for repairing cracks is to use brazing technology or activated diffusion healing (ADH). However, before ADH may be applied, the cracks must first be treated to remove oxides from the surfaces of the cracks or the braze will not wet and penetrate the metal surface. The oxides are produced by the high temperatures in the environment. The conventional method for treating the cracks is the use of fluoride ion cleaning or FIC. FIC utilizes gaseous hydrogen and hydrogen fluoride at high temperatures. FIC treats the entire part in a retort at high temperature. FIC requires a high capital cost for reactors and controls for hazardous gases, causes intragranular attack in regions of parts that do not have cracks and raises health and safety issues related to the handling of hydrogen fluoride.

U.S. Patent No. 4,670,067 discloses a brazing flux composed of potassium and cesium fluoro-aluminum complexes and having a melt starting point within the range of 440°C to 580°C. The flux reacts with and removes Al₂O₃ on the surface of an aluminum material.

U.S. Patent No. 6,367,686 discloses a braze paste comprising lithium fluoride in an amount up to about 20% by volume. The lithium fluoride reacts with and removes the oxide and is volatized during the thermal cycle, which requires a temperature of at least 1950°F.

What is needed is an improved and robust brazing formulation for repairing cracks in substrates that removes oxides from within the cracks and has a low melt point.

### SUMMARY OF THE INVENTION

In one embodiment, a braze formulation comprises a promoter comprising a blend of potassium tetrafluoroaluminate and potassium tetrafluoroborate and a metal filler.

In another embodiment, a promoter for a braze formulation comprises a blend of potassium tetrafluoroaluminate and potassium tetrafluoroborate.

In one embodiment, a method of preparing a braze formulation comprises mixing a promoter comprising a blend of potassium tetrafluoroaluminate and potassium tetrafluoroborate with a metal filler.

In another embodiment, a method for repairing a substrate comprises applying a braze formulation to a surface of the substrate to be repaired and heat treating the braze formulation, wherein the braze formulation comprises a promoter comprising a blend of potassium tetrafluoroaluminate and potassium tetrafluoroborate.

The various embodiments provide an improved and robust braze for repairing cracks in a substrate. The braze has a low melt point, removes oxides from within cracks, has improved penetration into cracks for repair and volatizes the oxide removal at low temperatures.

### BRIEF DESCRIPTION OF THE DRAWINGS

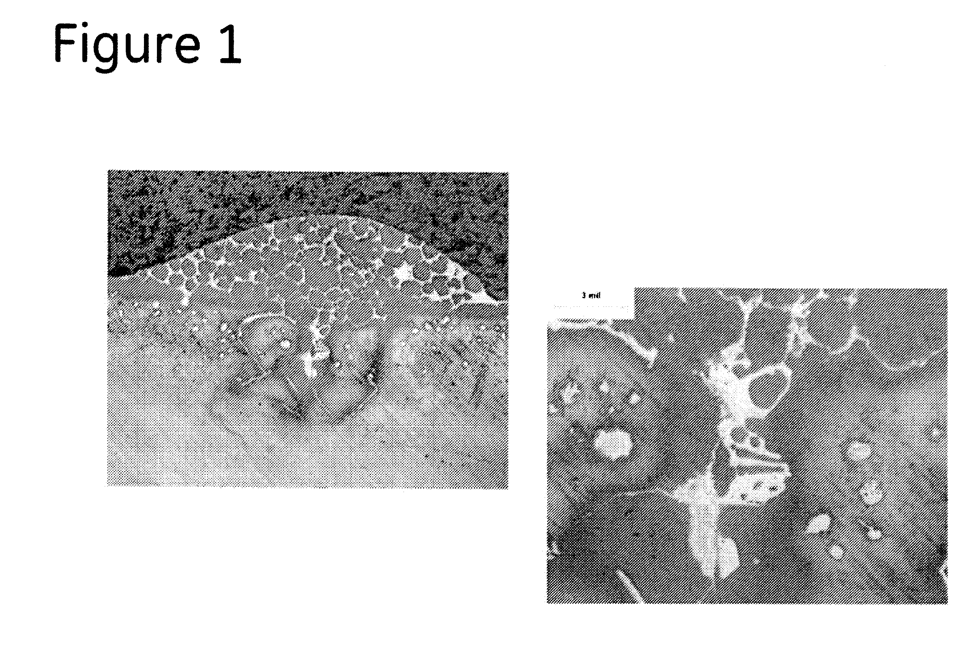

Figure 1 shows the repaired substrate from Example 1.

### DETAILED DESCRIPTION OF THE INVENTION

The singular forms "a," "an" and "the" include plural referents unless the context clearly dictates otherwise. The endpoints of all ranges reciting the same characteristic are independently combinable and inclusive of the recited endpoint. All references are incorporated herein by reference.

The modifier "about" used in connection with a quantity is inclusive of the stated value and has the meaning dictated by the context (e.g., includes the tolerance ranges associated with measurement of the particular quantity).

"Optional" or "optionally" means that the subsequently described event or circumstance may or may not occur, or that the subsequently identified material may or may not be present, and that the description includes instances where the event or circumstance occurs or where the material is present, and instances where the event or circumstance does not occur or the material is not present.

In one embodiment, a braze formulation comprises a promoter comprising a blend of potassium tetrafluoroaluminate (KAlF₄) and potassium tetrafluoroborate (KBF₄) and a metal filler.

The promoter comprises a blend of potassium tetrafluoroaluminate and potassium tetrafluoroborate. In one embodiment, the weight ratio of potassium tetrafluoroaluminate to potassium tetrafluoroborate is from about 10:90 to about 90:10. In another embodiment, the weight ratio is from about 25:75 to about 75:25. In another embodiment, the weight ratio is from about 40:60 to about 60:40. In another embodiment, the weight ratio is about 50:50.

The promoter has a melting point in the range of about 300°C to about 455°C. The low melt point of the promoter allows the braze to penetrate deeply into the cracks and to volatize at lower temperatures. The low melt point of the promoter also allows a broader selection of metal filler material, as the metal filler material should have a higher melt temperature than the promoter.

The metal filler may be any type of metallic materials comprising metals or metal alloys. The metal comprises at least one element selected from the group consisting of iron, cobalt, nickel, aluminum, chromium, titanium and mixtures of the foregoing. In one embodiment, the substrate may be stainless steel.

The metallic material may be a superalloy. In one embodiment, the superalloy is nickel-based, cobalt-based or iron-based. In one embodiment, a nickel-based superalloy includes at least about 40 percent by weight nickel and at least one component selected from the group consisting of cobalt, chromium, aluminum, tungsten, molybdenum, titanium and iron. Examples of nickel-based superalloys are designated by the trade names Inconel®, Nimonic® and René® and include equiaxed, directionally solidified and single crystal superalloys.

In another embodiment, a cobalt-based superalloy includes at least about 30 percent by weight cobalt and at least one component selected from the group consisting of nickel, chromium, aluminum, tungsten, molybdenum, titanium and iron. Examples of cobalt-base superalloys are designated by the trade names Haynes®, Nozzaloy®, Stellite® and Udimet®.

The metal filler and the promoter may be in powder form. In one embodiment, each of the powders has a particle size in the range of from about -60 mesh to about -325 mesh.

The promoter is present in the brazing formulation from about 0.25 to about 5 percent by weight based on the total weight of the braze formulation. In one embodiment, the promoter is present in the brazing formulation from about 0.50 percent by weight to about 2 percent by weight based on the total weight of the braze formulation. In another embodiment, the promoter is present in an amount of about 0.50 percent by weight based on the total weight of the braze formulation.

The metal filler is present in the brazing formulation from about 95 percent by weight to about 99.75 percent by weight based on the total weight of the braze formulation. In one embodiment, the metal filler is present in an amount of from about 98 percent by weight to about 99.50 percent by weight based on the total weight of the braze formulation. In another embodiment, the metal filler is present in an amount of about 99.50 percent by weight based on the total weight of the braze formulation.

The braze formulation may optionally comprise a gel binder to facilitate formation of the braze material into a paste. The gel binder may be any suitable gel binder known in the art, such as Braz-Binder gel sold by the Vitta Corporation. In one embodiment, the gel binder is present in an amount up to about 15 percent by volume. In another embodiment, the gel binder is present in an amount from about 5 percent by volume to about 15 percent by volume.

The braze formulation may optionally comprise a flexible binder to facilitate formation of the braze material into a tape. The flexible binder may be any conventional flexible binder, such as Braz-Tapes sold by the Vitta Corporation. In one embodiment, the flexible binder is present in an amount up to about 15 percent by volume. In another embodiment, the flexible binder is present in an amount from about 5 percent by volume to about 8 percent by volume.

In one embodiment, a promoter for a braze formulation comprises a blend of potassium tetrafluoroaluminate and potassium tetrafluoroborate. As stated above, the promoter has a low melt point in the range of about 300°C to about 455°C. The low melt point of the promoter allows the braze to penetrate deeply into the cracks and to volatize at lower temperatures. The low melt point of the promoter also allows a broader selection of metal filler material, as the metal filler material should have a higher melt temperature than the promoter.

In one embodiment, a method of preparing a braze formulation comprises mixing a promoter comprising a blend of potassium tetrafluoroaluminate and potassium tetrafluoroborate with a metal filler.

The components may be blended in any conventional manner. To form a braze material in paste form, the promoter and the metal filler are mixed together with a gel binder. The mixture with the gel binder is stirred gently to form the paste.

To form a braze material in a paint version, a solvent is added to a mixture of the promoter and metal filler. The solvent may comprise any suitable solvent known in the art including but not limited to, water-based solvents, alcohol-based solvents and mixtures thereof. Depending upon the consistency that is required, the solvent may be present in an amount up to about 50 percent by volume.

To form a braze material in a tape version, the promoter and the metal filler are mixed together with a flexible binder.

In another embodiment, a method for repairing a substrate requires applying a braze formulation to a surface of the substrate to be repaired and heat treating the braze formulation, wherein the braze formulation comprises a promoter comprising a blend of potassium tetrafluoroaluminate and potassium tetrafluoroborate.

The substrate may be any metallic material. A metallic substrate may be primarily formed of metal or metal alloys, but may also include non-metallic components. Nonlimiting examples of metallic materials are those which comprise at least one element selected from the group consisting of iron, cobalt, nickel, aluminum, chromium, titanium and mixtures which include any of the foregoing. In one embodiment, the metallic substrate may be stainless steel.

In another embodiment, the metallic material is a superalloy, which has a base element as the single greatest element in the superalloy. Some examples of base elements are nickel, cobalt or iron. In one embodiment, a nickel-based superalloy comprises at least 40 percent by weight of the nickel and at least one component selected from the group consisting of cobalt, chromium, aluminum, tungsten, molybdenum, titanium and iron. Examples of nickel-based superalloys are designated by the trade names Inconel®, Nimonic® and René® and include equiaxed, directionally solidified and single crystal superalloys.

In one embodiment, a superalloy comprises at least about 30 percent by weight cobalt, and at least one component selected from the group consisting of nickel, chromium, aluminum, tungsten, molybdenum, titanium and iron. Examples of cobalt-base superalloys are designated by the trade names Haynes®, Nozzaloy®, Stellite® and Udimet®.

The braze formulation is applied to the surface of the substrate to be repaired by conventional methods. The surface of the substrate to be repaired may be a crack, void or other anomaly.

If the braze formulation is in powder form, the powder is dispersed in a solvent, such as water or alcohol, to prepare a paste, slurry or suspension, which is applied to the appropriate portion of the substrate by brushing, spraying, dipping or taping. When the braze material of the present invention is used in paint form, it may be applied to the part to be repaired using a brush or spray gun. To apply the braze material in paste form, a syringe may be used to apply the braze material.

The braze material is heat treated by any conventional manner. In one embodiment, the braze material may be heat treated by a torch or furnace. If a furnace is used, it may be filled with a non-oxidizing atmosphere, such as nitrogen; although a furnace filled with air can also be employed. The braze material and substrate being repaired are subjected to a thermal treatment cycle wherein the braze material and the substrate are heated to a temperature within the range of from about a temperature where the promoter melts and through a range where the oxide removal volatizes and the metal filler melts and solidifies.

In one embodiment, the heat treatment comprises heating the brazing formulation to the melt temperature of the promoter in a range from about 300°C to about 455°C. In another embodiment, there are several heat treatment steps where the promoter melts and infiltrates the cracks, the promoter volatizes and the metal filler melts. In one embodiment, the heat treatment is heated to a heat treatment step in a range from about 300°C to about 455°C and to subsequent heat treatment steps in a range from about 1000°C to about 1500°C.

The brazed material may then be cooled to solidify the filler metal. The promoter first melts and reacts with any oxide on the surface of the substrate to remove it. The promoter does not react with the substrate. As the temperature increases, the promoter volatizes leaving a clean surface, the filler metal melts and the molten metallic material flows smoothly on the surface of the substrate from which the oxides have been removed and the surface of the substrate to be brazed is filled with the molten metallic material.

In one embodiment, the promoter is applied to the substrate to be repaired prior to the addition of the filler metal. In one embodiment, the promoter is applied to the substrate to clean away oxide material and is volatized and then the metal filler is applied to repair the substrate.

In some instances where there is significant oxide accumulation, it may be desirable to clean the substrate prior to applying the braze formulation. The cleaning process may be any suitable cleaning process, such as FIC or an advanced coating removal cleaning process as disclosed in copending United States Patent Application serial number 10/749,486 filed on December 31, 2003 and published as US2005-0139236 and incorporated herein by reference. Application of the braze formulation after the oxide cleaning provides further oxide material removal. The braze formulation penetrates deeper into the cracks on the substrate and removes oxide material that could not be removed or was missed by the cleaning process. When a precleaning step is used to remove oxide material, it may not be necessary to use a full or complete cleaning process. In one embodiment, a shortened cleaning step may be used before the brazing formulation is applied.

In order that those skilled in the art will be better able to practice the present disclosure, the following examples are given by way of illustration and not by way of limitation.

### EXAMPLES

### EXAMPLE 1

A nickel-based superalloy powder, -325 mesh was prepared by blending 50% by weight of a nickel-based superalloy powder (Rene 80) and 50% by weight of nickel-based superalloy powder (173, D15 powder). The superalloy powder was mixed with 0.25% by weight KAlF₄ and 0.25% by weight KBF₄. This mixture was applied to a crack on a substrate composed of GTD222 (GTD222 is a superalloy having 22.5 wt. % chromium, 14.0 wt. % cobalt, 2.3 wt. % titanium, 1.2 wt. % aluminum, 2.0 wt. % tungsten, 0.8 wt. % columbium, 1.0 wt. % tantalum, with the balance being nickel.) that was previously treated with a solution prepared from 71.25 vol % of 23 % fluosilicic acid, 23.75 vol. % of 85% phosphoric acid and 5 vol. % of 35 % hydrochloric acid. The cracked part was immersed in the solution at 80°C for 8 hours with mild agitation, then it was removed and rinsed in deionized water with ultrasonic agitation.

After the mixture of the superalloy powder, KAlF₄ and KBF₄ was applied to the substrate. The substrate was heat treated in a furnace by 1) ramping up at 25°F/min to 840°F +/-25°F; 2) holding at 840°F for 30 min; 3) ramping up at 25°F/min to 190°F +/-25°F 4) holding at 1900°F for 30 min; 5) ramping up at 25°F/min to 2210°F +/-25°F; 6) holding at 2210°F for 30 min 7) cooling to 2125°F +/-25°F; 8) holding at 2125°F for 4 hrs and 9) gas fan quenching to room temp. The heat treatment at 840°F melts the KAlF₄ and KBF4 material allowing the KAlF₄ and KBF₄ to flow deep into the crack to be repaired and remove any oxide materials. The heat treatment at 1900°F volatizes the KAlF₄ and KBF₄ leaving a prepared surface for the nickel-based superalloy. The nickel-based superalloy melts at 2210°F, wets the prepared surface of the substrate and fills the crack. During the quenching, the nickel-based superalloy solidifies and repairs the crack. Figure 1 shows the repaired substrate.

While typical embodiments have been set forth for the purpose of illustration, the foregoing descriptions should not be deemed to be a limitation on the scope herein. Accordingly, various modifications, adaptations and alternatives may occur to one skilled in the art without departing from the spirit and scope herein.

## Claims

1. A braze formulation comprising a promoter comprising a blend of potassium tetrafluoroaluminate and potassium tetrafluoroborate and a metal filler.

2. The braze formulation according to claim 1 wherein the promoter comprises from about 10:90 potassium tetrafluoroaluminate:potassium tetrafluoroborate to 90:10 potassium tetafluoroaluminate:potassium tetrafluoroborate.

3. The braze formulation according to claim 1 or claim 2 wherein the metal filler comprises metals or metal alloys.

4. The braze formulation according to any preceding claim wherein the metal filler comprises at least one element selected from the group consisting of iron, cobalt, nickel, aluminum, chromium, titanium and mixtures thereof.

5. The braze formulation according to any one of claims 1 to 3 wherein the metal filler comprises a nickel-based, cobalt-based or iron-based superalloy.

6. The braze formulation according to any preceding claim wherein the promoter is present in an amount of from about 0.25 to about 5 percent by weight based on the total weight of the formulation.

7. A promoter for a braze formulation comprising a blend of potassium tetrafluoroaluminate and potassium tetrafluoroborate.

8. The promoter according to claim 7 wherein the blend comprises from about 10:90 potassium tetrafluoroaluminate:potassium tetrafluoroborate to 90:10 potassium tetrafluoroaluminate:potassium tetrafluoroborate.

9. A method for making a braze formulation comprises blending a promoter comprising a blend of potassium tetrafluoroaluminate and potassium tetrafluoroborate with a metal filler.

10. A method for repairing a substrate comprising applying a braze formulation to a portion of a surface of the substrate to be repaired and heat treating the braze formulation, wherein the braze formulation comprises a promoter comprising a blend of potassium tetrafluoroaluminate and potassium tetrafluoroborate.
